# EUROPÄISCHE PATENTSCHRIFT

(11) **EP 2 937 810 B1**
(45) Veröffentlichungstag und Bekanntmachung des Hinweises auf die Patenterteilung: **08.05.2019**
(21) Anmeldenummer: 15161554.9
(22) Anmeldetag: 30.03.2015
(51) Int. Cl.: G06K 7/10, G02B 5/09

(54) **Kamera und Verfahren zur Erfassung eines bewegten Stroms von Objekten**
CAMERA AND METHOD FOR DETECTING A MOVING FLOW OF OBJECTS
SYSTÈME DE CAMÉRA ET PROCÉDÉ DE DÉTERMINATION D'UN FLUX MOBILE D'OBJETS

(30) Priorität: 24.04.2014 DE 102014105759
(43) Veröffentlichungstag der Anmeldung: 28.10.2015
(73) Patentinhaber: SICK AG, 79183 Waldkirch (DE)
(72) Erfinder: Wehrle, Klemens, 79297 Winden (DE)
(74) Vertreter: Hehl, Ulrich

(56) Entgegenhaltungen:
- DE-A1-102010 023 591
- DE-T2- 69 706 964
- US-A- 5 484 990
- US-A- 5 640 001

## Beschreibung

Die Erfindung betrifft eine Kamera und ein Verfahren zur Erfassung eines bewegten Stroms von Objekten nach dem Oberbegriff von Anspruch 1 beziehungsweise 10.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Derartige kamerabasierte Codeleser lösen die noch weit verbreiteten Barcodescanner zunehmend ab. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder ein und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert. In der Regel liefert das Fördersystem durch einen Inkrementalgeber fortlaufend wegbezogene Impulse, damit die Objektpositionen zu jedem Zeitpunkt auch bei wechselnder Fördergeschwindigkeit bekannt sind.

Um Codes zu lesen oder andere Auswertungen der Bilder vorzunehmen, sollten die Bilder ausreichend scharf sein. Das stellt eine Herausforderung dar, weil aufgrund unterschiedlicher Objekthöhen die Gegenstandsweite erheblich variiert. Die Tiefenschärfe des Kameraobjektivs genügt regelmäßig nicht, den gesamten erforderlichen Bereich abzudecken. Es ist deshalb üblich, hierfür eine variable Fokuseinstellung in der Kamera entsprechend dem Objektabstand nachzuführen. Das wiederum bedeutet nicht nur einen hohen Aufwand, sondern löst auch das Problem nicht zufriedenstellend, wenn mehrere Objekte deutlich unterschiedlicher Höhe gleichzeitig erfasst werden sollen. Die Kamera kann dann bestenfalls auf eine der erforderlichen Fokuslagen eingestellt werden. Für Objekte außerhalb des begrenzten Schärfentiefenbereichs entstehen somit Bilder minderer Qualität, und es kann zu Fehllesungen (no read) von Codes kommen. Diese Situation tritt bei breiteren Förderbändern oder mehreren nebeneinander angeordneten Förderbändern besonders häufig ein. Außerdem verbleibt bei Fokussierung auf ein hohes Objekt nur ein relativ kleiner Erfassungsbereich.

Ein herkömmlicher Ansatz beispielsweise gemäß DE 102 07 538 A1 oder EP 2 693 363 A1 besteht darin, mehrere Erfassungseinheiten einzusetzen und mit einer kooperativen Fokusstrategie dafür zu sorgen, dass jedes Objekt von zumindest einer Erfassungseinheit scharf erfasst wird. Das führt jedoch zu einem erheblichen Zusatzaufwand für die weiteren Erfassungseinheiten.

Die EP 1 931 133 A1 nutzt verschiedene Ausführungsformen einer Optik, um eine Struktur mehrfach in voneinander getrennten und versetzten Bereichen auf einem Bildaufnehmer abzubilden. Das dient aber weder dem Lesen von Codes, noch einer unterschiedlichen Fokussierung.

In der DE 20 2013 009 198 U1 wird ein System zur Sichtfelderweiterung einer Kamera offenbart, das auf einem aufgesetzten Modul mit zwei Spiegeln basiert. Dadurch wird ein verbreiterter Sichtbereich streifenweise übereinander auf dem Bildsensor abgebildet. Die EP 2 624 042 A2 zeigt einen Spiegelaufsatz mit einer aufwändigeren Konstruktion aus vier Spiegeln für eine ähnliche Sichtfeldverbreiterung. In beiden Fällen ist aber weiterhin eine richtige Fokussierung der Empfangsoptik vorausgesetzt.

Die DE 697 06 964 T2 offenbart einen Codescanner mit einem Polygonspiegelrad, dessen Facetten eine unterschiedliche Krümmung aufweisen. Dadurch wird der Abtaststrahl je nach Facette in verschiedenen Brennpunkten fokussiert, so dass sich die Gesamttiefenschärfe des Codescanners erhöht.

Die US 5 640 001 beschreibt ein Handgerät zum Codelesen, bei dem in einer Ausführungsform mehrere gestaffelte Spiegel vorgesehen sind. So wird ein gleichzeitiges, mehrfaches Lesen in unterschiedlichen Bereichen eines Bildsensors bei unterschiedlichen Tiefenschärfenbereichen ermöglicht.

Dieses Dokument beschreibt die Merkmale des Oberbegriffs von Anspruch 1.

Aus der DE 10 2010 023 591 A1 ist ein Stereokamerasystem bekannt, in dem ein zeitweise zugeführtes oder als Strahlteiler wirkendes optisches Element vorgesehen ist. Dadurch beinhaltet der Bildsensor mindestens zwei Teilbereiche mit unterschiedlichen Objektweiten .

Es ist daher Aufgabe der Erfindung, eine verbesserte Erfassung von in einem Strom bewegten Objekten zu erreichen.

Diese Aufgabe wird durch eine Kamera und ein Verfahren zur Erfassung eines bewegten Stroms von Objekten nach Anspruch 1 beziehungsweise 10 gelöst. Dabei geht die Erfindung von dem Grundgedanken aus, Abschnitte des Objektstroms mehrfach durch eine Empfangsoptik auf einem Bildsensor abzubilden und dabei die jeweiligen Lichtwege mit einer Spiegeleinrichtung mit mindestens zwei Spiegelelementen in unterschiedlicher Weise zu falten.

Der mehrfachen Abbildung kommt hier eine doppelte Bedeutung zu. Einerseits wird der Bildsensor mehrfach genutzt. Ein Teil der verfügbaren Fläche des Bildsensors wird aufgegeben, um mehrere Abschnitte des Objektstroms gleichzeitig auf dem Bildsensor abzubilden, insbesondere übereinander. Andererseits werden Abschnitte des Objektstroms mehrfach abgebildet, und zwar wegen der Spiegelelemente mit unterschiedlichen Lichtwegen. Die Variation der Länge der Lichtwege über die mehreren Spiegelelemente führt zu unterschiedlichen Gegenstandsweiten. Für zumindest eine Abbildung eines Abschnitts ergibt sich somit eine zu dem Tiefenschärfenbereich der Empfangsoptik passende Gegenstandsweite und damit ein scharfes Bilds.

Es ist zwar durch geeignete Abstandsstaffelung und Verkippung der Spiegelelemente denkbar, dass derselbe Abschnitt gleichzeitig mit verschieden langen Lichtwegen mehrfach auf dem Bildsensor abgebildet wird. Das ist aber nicht erforderlich. Ebenso vorstellbar ist ein deutlicher Versatz der Abschnitte im Objektstrom durch Verkippen der Spiegelelemente, so dass ein Abschnitt erst in einem späteren Bild erneut aufgenommen wird. So wird beispielsweise ein Abschnitt zunächst in einer früheren Position mit einer großen Gegenstandsweite und ein weiteres Mal in einer späteren Position mit einer kleinen Gegenstandsweite erfasst. Der Versatz ist ohne weiteres kompensierbar, wenn die zwischenzeitliche Objektbewegung durch Kenntnis einer konstanten Fördergeschwindigkeit oder mit Hilfe eines zusätzlichen Vorschubsensors bekannt erfasst wird.

Die Erfindung hat den Vorteil, dass ohne den Einsatz zusätzlicher Bildsensoren oder einer verstellbaren Fokuseinheit scharfe Bilder von Objekten mit deutlich unterschiedli chen Objekthöhen aufgenommen werden können. Der Tiefenschärfenbereich wird durch Mehrfachabbildung bei verschiedenen Lichtweglängen beziehungsweise Gegenstandsweiten vergrößert. Die oft jedenfalls näherungsweise quadratische Fläche des Bildsensors wird in ihrer der Bewegungsrichtung der Objekte entsprechenden Längsrichtung ohnehin nicht zwingend benötigt, weil bei genügend hoher Aufnahmefrequenz ohnehin nur redundante Bildinformationen erfasst würden. Durch Aufteilung des quadratischen Sichtbereichs in Segmente wird die Höhenrichtung besser genutzt, und auch mit dem flacheren Sichtfeld der Segmente bleibt der gesamte Objektstrom erfassbar. Die Redundanz wird dabei vorteilhaft dazu verwendet, die Abschnitte bei unterschiedlichen Lichtweglängen und damit jeden Abschnitt wenigstens einmal möglichst scharf aufzunehmen. Durch die gefalteten Lichtwege wird auch die Problematik von dynamischen Fokusverstellungen eines zu kleinen Sichtfeldes bei hohen Objekten gelöst ("Tannenbaumeffekt").

Die Kamera weist bevorzugt eine Auswahleinheit auf, um jeweils einen abgebildeten Abschnitt größter Bildschärfe auszuwählen. Die Abschnitte sind redundant je einmal je Spiegelelement aufgenommen. Demnach gibt es einen Lichtweg, mit dem der Abschnitt unter einer für die Empfangsoptik passenden oder jedenfalls am besten passenden Gegenstandsweite aufgenommen wurde. Die Auswahleinheit bestimmt die Bildschärfe, beispielsweise mit einem über die Pixel der Aufnahme der Abschnitte gebildeten Kontrastmaß, und selektiert jeweils diejenige Aufnahme des Abschnitts für nachgelagerte Bearbeitungsschritte, welche die größte Bildschärfe hat. Sofern die Bilder für Decodierung von Codes oder OCR (Optical Character Recognition) verwendet werden, kann die Auswahl darin bestehen, eine Decodierung beziehungsweise Zeichenerkennung mit allen Abschnitten zu versuchen.

Die Kamera ist bevorzugt als kamerabasierter Codeleser mit einer Decodiereinheit zum Identifizieren von Codebereichen und zum Auslesen von Codeinhalten ausgebildet. Die Decodierung hat eine besonders hohe Leserate, weil die Codes mit unterschiedlichen Gegenstandsweiten und dadurch zumindest einmal zumindest annähernd scharf aufgenommen werden.

Die Kamera weist bevorzugt eine Beleuchtungseinrichtung auf, deren Licht über die Spiegelelemente in die jeweiligen Abschnitte umgelenkt wird, um sie auszuleuchten. Die Beleuchtung nutzt also die gleichen Spiegelelemente wie das Empfangslicht. Dadurch werden die Abschnitte ausgeleuchtet, ohne dass an der Beleuchtungseinheit gegenüber einer herkömmlichen Beleuchtung etwas verändert werden müsste. Dabei ist nach demselben Mechanismus wie für den Tiefenschärfenbereich der Empfangsoptik sogar eine etwaige Fokussierung der Beleuchtung in zumindest einem Abschnitt richtig angepasst, und zwar dem Abschnitt, der auch scharf aufgenommen wird, sofern die Beleuchtung und die Empfangsoptik aufeinander abgestimmt sind.

Die Spiegelelemente sind bevorzugt hintereinander oder übereinander gestaffelt angeordnet. Dabei bedeutet hintereinander eine Mehrfachanordnung zumindest näherungsweise in Bewegungsrichtung der Objekte und übereinander in einer Richtung senkrecht dazu. Die gestaffelten Spiegelelemente bilden eine Art Treppe mit zunehmend längeren Lichtwegen. Sie sind bevorzugt nahezu parallel zueinander ausgerichtet, so dass die erfassten Abschnitte des Objektstroms nebeneinander liegen. In einer bevorzugten Ausführungsform werden die gestaffelten Spiegelelemente leicht zueinander geneigt, denn so kann sogar derselbe Abschnitt gleichzeitig mit verschiedenen Lichtweglängen erfasst und in mehreren Segmenten auf dem Bildsensor abgebildet werden.

Die Spiegelelemente sind bevorzugt derart gegeneinander verkippt, dass sie Objektflächen unterschiedlicher Orientierung aus zueinander beabstandeten Abschnitten erfassen. Hier sorgt also in erste Linie die Verkippung und nicht wie bei einer gestaffelten Anordnung der Abstand der Spiegelelemente für unterschiedlich lange Lichtwege. Ein Abschnitt wird hier erst mit Zeitversatz erneut aufgenommen. Je nach Objektgeometrie kann es auch sein, dass ein Abschnitt gar nicht mehrfach erfasst wird, aufgrund der Verkippung aber sichergestellt werden kann, dass der betreffende Objektbereich überhaupt wenigstens einmal erfasst wird. Ein Beispiel hierfür ist die gleichzeitige Aufnahme der Rückseite eines Objekts, das die Kamera bereits passiert hat, der Oberseite eines Objekts unter der Kamera und die Vorderseite eines noch zu der Kamera hin bewegten Objekts.

Die Spiegelelemente sind in sich in mindestens zwei Spiegeluntersegmente unterteilt, die gegeneinander verkippt sind, um in Breitenrichtung nebeneinanderliegende Teilabschnitte übereinander auf dem Bildsensor abzubilden. Diese Ausführungsform kombiniert die erfindungsgemäße Mehrfachaufnahme bei unterschiedlichen Lichtweglängen mit einer Sichtfeldverbreiterung, wie sie aus der einleitend genannten DE 20 2013 009 198 U1 bekannt ist. Die Spiegeluntersegmente werden also zueinander in Längs- und/oder Querrichtung verkippt, um nebeneinanderliegende Segmente der Abschnitte zu erfassen. Jedes Spiegelelement kann dabei in allen Varianten ausgestaltet werden, die in der DE 20 2013 009 198 U1 beschrieben ist. Alternativ können zur Erfassung eines breiten Objektstroms mehrere Kameras nebeneinander eingesetzt werden. Es ist in beiden Fällen, ob durch Erfassung über Spiegeluntersegmente oder mit mehreren Kameras, vorteilhafterweise möglich, die Segmente der Abschnitte durch Bildbearbeitung miteinander zu verbinden (Image Stitching).

Die Kamera ist vorzugsweise stationär an einer Fördereinrichtung für mit Codes versehene Objekte montiert, die den Strom von Objekten bilden. Dies ist ein besonders häufiger Anwendungsfall, in dem eine scharfe Erfassung der Codes auf unterschiedlich hohen Objekten für eine verbesserte Leserate wichtig ist.

Die Kamera ist bevorzugt von dem bewegten Strom weg ausgerichtet. Sehr technisch ausgedrückt ist die optische Achse der Empfangsoptik nahezu senkrecht zur Bewegungsrichtung der Objekte und von den Objekten abgewandt angeordnet. Besser vorstellbar ist dies im Falle einer Kamera, die über einer Fördereinrichtung montiert ist und nach dieser Ausführungsform im Wesentlichen nach oben ausgerichtet ist. Die Spiegeleinrichtung sorgt in dieser Ausführungsform für eine Umlenkung in der Größenordnung von 180°, womit auch Variationen von bis zu 20°-40° umfasst sein sollen.

In einer anderen bevorzugten Ausführungsform ist die Kamera parallel zu dem bewegten Strom ausgerichtet. Hier zeigt die optische Achse der Empfangsoptik in die Bewegungsrichtung der Objekte oder gegen diese Bewegungsrichtung. Die Spiegeleinrichtung sorgt dabei für eine Umlenkung in der Größenordnung von 90°. Erneut sind die Winkelangaben zumindest nicht auf 10° festgelegt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Ansicht einer an einem Förderband mit zu erfassenden codetragenden Objekten montierten Kamera;
- Fig. 2: eine vergrößerte Darstellung einer Kamera und ihres mittels einer Spiegeleinrichtung segmentierten Sichtbereichs;
- Fig. 3a: eine Frontalansicht auf eine herkömmliche Kamera mit zusammenhängendem Sichtbereich;
- Fig. 3b: eine dreidimensionale Ansicht der Kamera gemäß Figur 3a;
- Fig. 4a: eine Frontalansicht auf einer Ausführungsform einer erfindungsgemäßen Kamera mit gestaffeltem segmentiertem Sichtbereich in vertikaler Anordnung;
- Fig. 4b: eine dreidimensionale Ansicht der Kamera gemäß Figur 4a;
- Fig. 5: ein beispielhaftes Bild von in mehreren Abschnitten mehrfach aufgenommenen Codes;
- Fig. 6: eine dreidimensionale Ansicht einer weiteren Ausführungsform einer erfindungsgemäßen Kamera mit gestaffeltem segmentiertem Sichtbereich in horizontaler Anordnung; und
- Fig. 7: eine dreidimensionale Ansicht einer weiteren Ausführungsform einer erfindungsgemäßen Kamera mit vereinzeltem segmentiertem Sichtbereich.

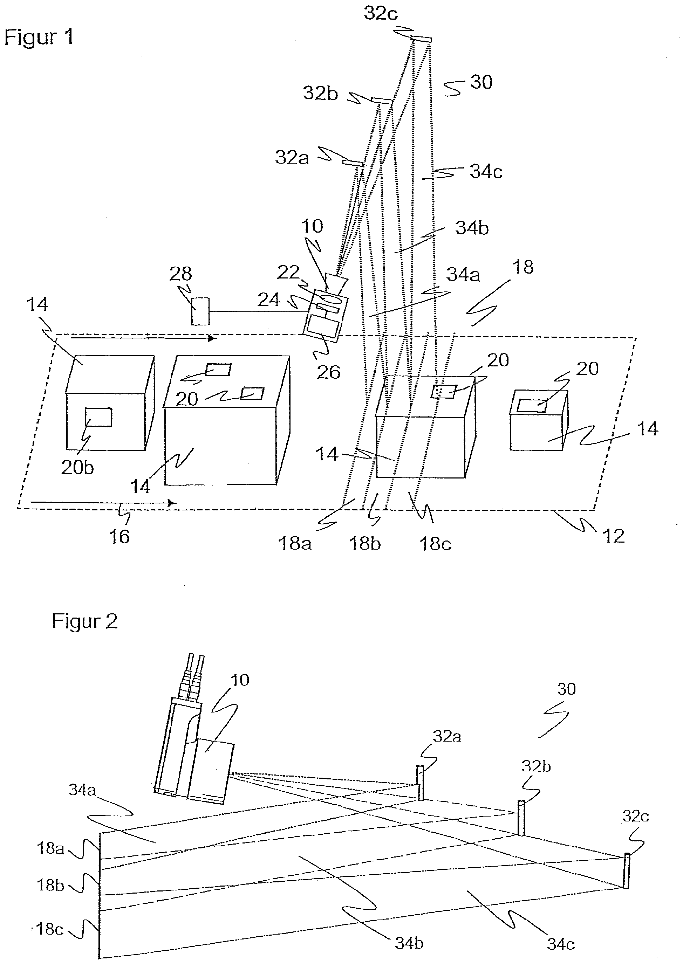

Figur 1 zeigt eine als Codeleser ausgebildete Kamera 10, die über einem Förderband 12 montiert ist, auf dem Objekte 14 in einer durch Pfeile angedeuteten Förderrichtung 16 durch einen Erfassungsbereich 18 der Kamera 10 gefördert werden. Die Objekte 14 tragen an ihren Außenflächen Codes 20, die von der Kamera 10 gelesen werden. Dazu nimmt die Kamera 10 über eine Empfangsoptik 22 mit einem Bildsensor 24 Bilder der jeweils im Erfassungsbereich 18 befindlichen Objekte 14 auf. Eine Auswertungseinheit 26 umfasst eine Decodiereinheit, welche die Bilder auswertet. Dabei werden Codebereiche identifiziert und die Codeinhalte der Codes 20 ausgelesen. Die Auswertungsfunktionalität kann auch zumindest teilweise außerhalb der Kamera 10 implementiert sein.

Die Codes 20 können von der Kamera 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 20b eine Mehrzahl von Kameras 10 aus verschiedenen Richtungen montiert sein, um eine sogenannte Omnilesung aus allen Richtungen zu ermöglichen. Die Anordnung des oder der Kameras 10 zu einem Codelesesystem erfolgt in der Praxis meist als Lesetunnel. Zu dem Lesetunnel können weitere Sensoren gehören, die stellvertretend durch einen Vorschubsensor 28 dargestellt sind, beispielsweise einen Inkrementalgeber, mit dem die Geschwindigkeit beziehungsweise der Vorschub des Förderbandes 12 ermittelt wird. Dadurch können Informationen, die irgendwo längs des Förderbandes 12 erfasst werden, auf anderer Positionen längs des Förderbandes oder, was dank des bekannten Vorschubs gleichwertig ist, andere Zeitpunkte umgerechnet werden. Weitere denkbare Sensoren sind eine Triggerlichtschranke, welche jeweils den Eintritt eines Objekts 14 in den Erfassungsbereich 18 erkennt, oder ein Geometriesensor, insbesondere ein Laserscanner, welcher eine 3D-Kontur der Objekte 14 auf dem Förderband 12 erfasst.

Die Empfangsoptik 22 hat nur einen begrenzten Tiefenschärfenbereich, mit dem nicht alle Objekthöhen abgedeckt werden. Deshalb ist der Kamera 10 eine Spiegeleinrichtung 30 mit mehreren Spiegelelementen 32a-c vorgeordnet. Die Spiegelelemente 32a-c erzeugen jeweils ein Sichtbereichssegment 34a-c, mit dem wiederum jeweils ein Abschnitt 18a-c des Erfassungsbereichs 18 auf dem Förderband 14 erfasst wird. Dies ist in Figur 2 nochmals vergrößert und um 90° verdreht gezeigt. Dadurch, dass die Spiegelelemente 32a-c gestaffelt in unterschiedlichen Höhen und damit unterschiedlichen Abständen zu der Kamera 10 angeordnet sind, ergeben sich unterschiedliche Lichtwege und damit Gegenstandsweiten. So wird erreicht, dass ein Objekt 14 unterschiedlicher Höhe in zumindest einem Abschnitt 18a-c innerhalb des Tiefenschärfenbereichs der Empfangsoptik 22 erfasst wird. Es genügt daher, dass die Empfangsoptik 22 eine feste Brennweite besitzt, obwohl eine ergänzende Fokusverstellung nicht zwingend ausgeschlossen werden soll.

Durch die Segmentierung des Erfassungsbereichs 18 in Abschnitte 18a-c entstehen auch auf dem Bildsensor 24 Bildsegmente. Die Abschnitte 18a-c werden streifenweise übereinander auf dem Bildsensor 24 abgebildet. Ein Bildsensor 24 als Matrixchip beispielsweise in CCD- oder CMOS-Technologie hat ohnehin ein Seitenverhältnis, das zumindest nicht allzu weit von einer quadratischen Form abweicht. Mit üblichen Aufnahmefrequenzen und Bandgeschwindigkeiten des Förderbandes 12 wird deshalb ohnehin jeder Code 20 vielfach aufgenommen, so dass auch die schmaleren Bildsegmente ausreichen, alle Codes 20 zu erfassen. Es ist auch denkbar, die Aufnahmefrequenz insbesondere um die Anzahl von Spiegelelementen 32a-c zu erhöhen, um die optische Partitionierung des Bildsensors 24 auszugleichen.

Die dargestellte Anzahl von drei Spiegelelementen 32a-c ist als ein besonders geeignetes Beispiel zu verstehen. Die Anzahl reicht aus, um typische Objekthöhen abzudecken, und segmentiert zugleich den Bildsensor 24 noch nicht allzu sehr, so dass noch eine ausreichende Breite der Abschnitte 18a-c verbleibt. Eine Spiegeleinrichtung 30 mit zwei oder mehr als drei Spiegelelementen ist aber auch möglich.

Im Gegensatz zu einer reinen Fokusverstellung, die sich für eine Objekthöhe entscheiden muss, können mit der Spiegeleinrichtung 30 auch mehrere nebeneinander befindliche Objekte 14 stark unterschiedlicher Objekthöhen erfasst werden. In einem der Abschnitte 18a-c passt dann aufgrund der gestaffelt angeordneten Spiegelelemente 32a-c die Gegenstandsweite zu dem einen Objekt 14, in einem anderen Abschnitt 18a-c zu dem anderen Objekt 14. Das funktioniert auch bei einer beliebigen Anzahl von Objekten. Es müssen für eine vollständige Erfassung lediglich so viele Spiegelelemente 32a-c vorgesehen sein, dass sich die Tiefenschärfenbereiche lückenlos ergänzen.

Ein weiterer Vorteil ist, dass eine optionale und in Figur 1 nicht dargestellte aktive Beleuchtung der Kamera 10 ebenfalls als zu dem Bildsensor 24 koaxiale Beleuchtung über die Spiegeleinrichtung 30 gefaltet werden kann. Damit werden die Abschnitte 18a-c gezielt und sogar mit der richtigen Fokussierung einer Sendeoptik der Beleuchtung ausgeleuchtet. Damit kann die optische Leistung wesentlich gezielter eingesetzt werden als mit einer alternativ möglichen großflächigen und nicht über die Spiegeleinrichtung 30 geführten Beleuchtung.

Die aufgenommenen Bilder können in der Auswertungseinheit 26 oder in einer nachgelagerten Bildverarbeitung mit an die Abschnitte 18a-c angepassten Parametern aufbereitet werden. Ebenso können Parameter des Bildsensors 24 oder der Beleuchtung abschnittsweise eingestellt beziehungsweise geregelt werden. Dadurch werden beispielsweise Kontrast oder Helligkeit angepasst.

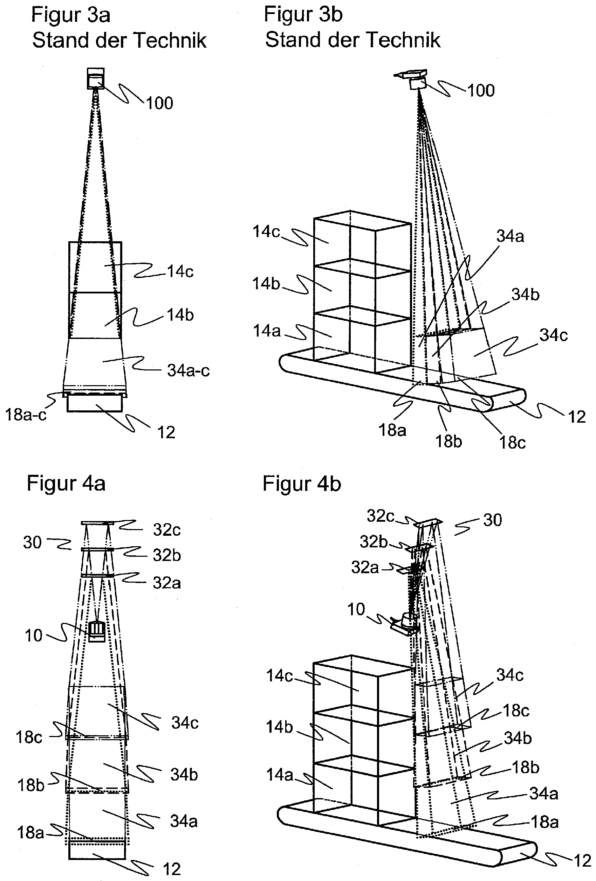

Die Figuren 3 und 4 illustrieren nochmals in einer anderen Darstellung die Erweiterung des Tiefenschärfenbereichs durch in unterschiedlichen Abständen zu der Kamera 10 angeordnete Spiegelsegmente 32a-c. Der resultierende erweiterte Tiefenschärfenbereich wird dabei wie schon erläutert anteilig durch unterschiedliche Lichtweglängen auf die jeweiligen Höhenzonen verteilt.

Figur 3 zeigt zunächst zum Vergleich eine herkömmliche Kamera 100 ohne Spiegeleinrichtung 30. Dabei ist Figur 3a eine Frontalansicht und Figur 3b eine zugehörige dreidimensionale Ansicht von schräg vorne. Es sind jeweils beispielhafte zu erfassende Objekte 14a-c unterschiedlicher Höhen gezeigt. Die Kamera 100 ist mit ihrem begrenzten Tiefenschärfenbereich auf niedrige Objekte 14c eingestellt. Die Segmentierung in Abschnitte 18a-c ist nur zum besseren Verständnis eingezeichnet. Direkt aneinander angrenzende Abschnitte 18a-c werden natürlich auch bei der herkömmlichen Kamera 100 übereinander auf deren Bildsensor abgebildet. Die Lichtwege unterscheiden sich aber mangels Spiegeleinrichtung 30 nicht von Abschnitt 18a-c zu Abschnitt 18a-c, so dass die Unterteilung eine rein künstliche Definition und in den Bildern der Kamera 100 nicht erkennbar ist.

Höhere Objekte 14b-c liegen außerhalb des begrenzten Tiefenschärfenbereichs der Kamera 100 und werden deshalb nicht scharf aufgenommen. Es wäre denkbar, dies durch eine Fokusverstellung auszugleichen. Eine fokusverstellbare Empfangsoptik ist aber nicht nur wesentlich aufwändiger als eine Empfangsoptik mit fester Brennweite. Es werden dadurch zwei Probleme nicht gelöst: Zum einen kann die Fokusverstellung bei nebeneinanderliegenden Objekten 14a-c unterschiedlicher Höhe nur auf ein Objekt 14a-c scharf gestellt werden. Außerdem sieht man in Figur 3a, dass das hohe Objekt 14c gar nicht vollständig im Sichtfeld der Kamera 100 liegt. Diese eingeschränkte Lesefeldbreite wird auch durch eine Fokusverstellung nicht aufgehoben.

Figur 4 zeigt nun die entsprechende Situation für eine Ausführungsform einer erfindungsgemäßen Kamera 10. Durch die Spiegelanordnung 30 mit den beispielhaft drei Spiegelelementen 30a-c wird der Lesebereich gefaltet und damit ein erweiterter Tiefenschärfenbereich gewonnen. Außerdem ist die Lesebreite über alle Objekthöhen homogen verteilt. Das hohe Objekt 14c wird durch den Abschnitt 18c über das am weitesten entfernten Spiegelelement 30c, das mittlere Objekt 14b durch den Abschnitt 18b über das mittlere Spiegelelement 30b und das niedrige Objekt 14a durch den Abschnitt 18a über das am nächsten angeordnete Spiegelelement 30a erfasst. Man kann die Abschnitte 18a-c oder die Objekte 14a-c verschiedener Höhen auch als Illustration der einander lückenlos ergänzenden Tiefenschärfenbereiche auffassen. Abweichend sind ein gegenseitiger Überlapp und in gewissen Grenzen auch Lücken denkbar, in denen Bilder dann nicht mehr mit voller Schärfe erfasst werden.

Die Spiegelelemente 32a-c sind untereinander vorzugsweise gleich groß und gleich beabstandet, um Aufbau und Auswertung einfach zu halten. Auch hiervon kann abgewichen werden. Außerdem können die Spiegelelemente 32a-c zueinander parallel oder verkippt ausgerichtet werden. Das führt zu einem entsprechenden Versatz der Abschnitte 18a-c in Förderrichtung 16 auf dem Förderband 12. Jeglicher Versatz kann aufgrund des beispielsweise über den Vorschubsensor 28 erfassten Vorschubs des Förderbandes 12 herausgerechnet werden. Dennoch ist auch möglich, die Spiegelelemente 32a-c gerade so zueinander zu neigen, dass die Abschnitte 18a-c nicht in Förderrichtung versetzt sind.

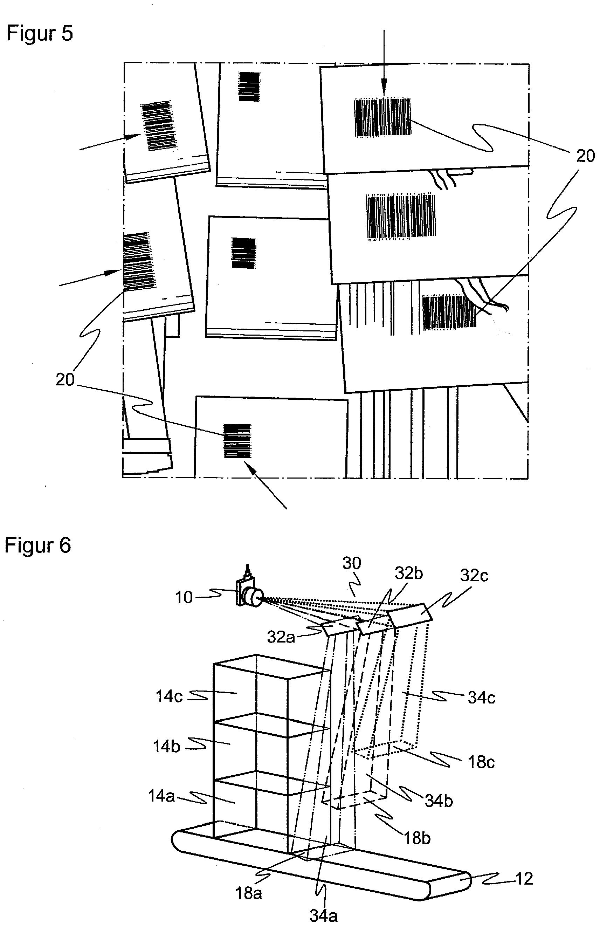

Figur 5 zeigt ein Beispielbild von Codes 20, die mit einer erfindungsgemäßen Kamera 10 aufgenommen wurden. Es ist deutlich erkennbar, dass die Codes 20 dreimal in übereinander liegenden Streifen und mit unterschiedlicher Bildschärfe erfasst wurden. Pfeile zeigen auf diejenigen Aufnahmen der Codes 20, die zu einer erfolgreichen Decodierung genutzt werden konnten. Das ist für jeden Code 20 mindestens einmal und für den linken Code 20 sogar zweimal gelungen, d.h. der linke Code 20 wurde in einer Höhe aufgenommen, die in gleich zwei Abschnitten 18a-c in einem noch ausreichenden Tiefenschärfenbereich lag.

Figur 6 zeigt eine weitere Ausführungsform der Kamera 10 und der vorgeordneten Spiegeleinrichtung 30. Im Unterschied zu den bisherigen Ausführungsformen, wo die Kamera 10 nach oben ausgerichtet ist und die Spiegelelemente 32a-c nach oben hin mit unterschiedlichen Abständen gestaffelt werden, ist hier nun die Kamera 10 mit ihrer optischen Achse zumindest nahezu parallel zu der Förderrichtung 16 ausgerichtet. Dementsprechend werden die Spiegelelemente 32a-c horizontal gestaffelt und sind nicht mehr parallel zum Förderband 12 für eine 180°-Umlenkung ausgerichtet, sondern sind um etwa 45° geneigt, so dass sie den Lichtweg um etwa 90° falten. Der Erfassungsbereich 18 wird dadurch insgesamt gegenüber der Kamera 10 in Förderrichtung versetzt. Diese Anordnung ist beispielsweise besonders bei höhenbeschränkten Einbausituationen geeignet.

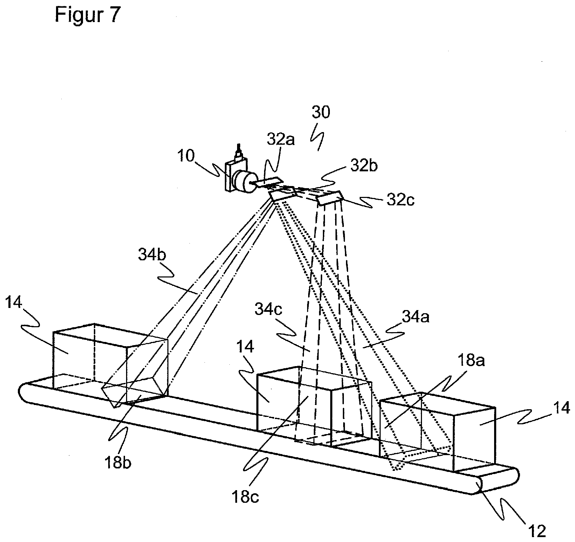

Figur 7 zeigt noch eine andere Ausführungsform der Kamera 10. Während bisher die unterschiedlichen Lichtwege hauptsächlich durch die Abstände und nur ergänzend die Kippwinkel der Spiegelelemente 32a-c erreicht wurden, ist hier eine deutlich unterschiedliche Verkippung gewählt. Dadurch wird der Versatz der Abschnitte 18a-c deutlich größer als in den bisher beschriebenen Ausführungsformen. Die Anordnung kann wie bisher dafür genutzt werden, unterschiedlich hohe Objekte 14a-c scharf zu erfassen. Figur 7 veranschaulicht aber auch, dass durch die Spiegeleinrichtung 30 mit einer einzigen Kamera 10 zugleich eine Front-, Top- und Rückseitenlesung der Objekte 14 erreicht werden kann, wofür bislang zumindest zwei Kameras mit unterschiedlicher Aufnahmeposition und Ausrichtung genutzt wurde. Daraus wird klar, dass sowohl die Abstände als auch die Kippwinkel der Spiegelelemente 32a-c einzeln oder in Kombination zu einem erweiterten Sichtbereich führen. Es können noch zusätzliche Spiegelelemente 32a-c eingesetzt werden, um eine Front- Top- und Rückseitenlesung jeweils mehrfach mit unterschiedlich langen Lichtwegen und damit in sich schon erweitertem Tiefenschärfenbereich zu ermöglichen.

## Patentansprüche

1. Kamera (10) zur Erfassung von einem relativ zu der Kamera (10) bewegten Strom von Objekten (14) und zum Auslesen von auf den Objekten (14) angebrachten Codes (20), wobei die Kamera (10) einen Bildsensor (24) zum Aufnehmen von Bildern der Objekte (14) und eine dem Bildsensor (24) vorgeordnete Empfangsoptik (22) mit einem Tiefenschärfenbereich aufweist,
der eine Spiegeleinrichtung (30) mit mindestens zwei Spiegelelementen (32a-c) vorgeordnet ist, die untereinander einen unterschiedlichen Abstand zu der Empfangsoptik (22) und/oder einen unterschiedlichen Kippwinkel aufweisen und so Abschnitte (18a-c) des Objektstroms mehrfach mit unterschiedlich langen Lichtwegen, die zu unterschiedlichen Gegenstandsweiten führen, und damit unterschiedlichen Tiefenschärfenbereichen gleichzeitig auf dem Bildsensor (24) abbilden,
**dadurch gekennzeichnet,**
**dass** die Spiegelelemente (32a-c) in sich in mindestens zwei Spiegeluntersegmente unterteilt sind, die gegeneinander verkippt sind, um in Breitenrichtung nebeneinanderliegende Teilabschnitte übereinander auf dem Bildsensor (24) abzubilden.

2. Kamera (10) nach Anspruch 1,
die eine Auswahleinheit (26) aufweist, um jeweils einen abgebildeten Abschnitt größter Bildschärfe auszuwählen.

3. Kamera (10) nach Anspruch 1 oder 2,
die als kamerabasierter Codeleser mit einer Decodiereinheit (26) zum Identifizieren von Codebereichen (20) und zum Auslesen von Codeinhalten ausgebildet ist.

4. Kamera (10) nach einem der vorhergehenden Ansprüche,
die eine Beleuchtungseinrichtung aufweist, deren Licht über die Spiegelelemente (32a-c) in die jeweiligen Abschnitte (18a-c) umgelenkt wird, um sie auszuleuchten.

5. Kamera (10) nach einem der vorhergehenden Ansprüche,
wobei die Spiegelelemente (32a-c) hintereinander oder übereinander gestaffelt angeordnet sind.

6. Kamera (10) nach einem der vorhergehenden Ansprüche,
wobei die Spiegelelemente (32a-c) derart gegeneinander verkippt sind, dass sie Objektflächen unterschiedlicher Orientierung aus zueinander beabstandeten Abschnitten (18a-c) erfassen.

7. Kamera (10) nach einem der vorhergehenden Ansprüche in stationärer Montage an einer Fördereinrichtung (12) für mit Codes (20) versehene Objekte (14), die den Strom von Objekten (14) bilden.

8. Kamera (10) nach einem der vorhergehenden Ansprüche,
wobei die Kamera (10) von dem bewegten Strom weg ausgerichtet ist.

9. Kamera (10) nach einem der vorhergehenden Ansprüche,
wobei die Kamera (10) parallel zu dem bewegten Strom ausgerichtet ist.

10. Verfahren zur Erfassung eines bewegten Stroms von Objekten (14) und zum Auslesen von auf den Objekten (14) angebrachten Codes (20), bei dem Bilder der Objekte (14) durch eine Empfangsoptik (22) mit einem Tiefenschärfenbereich aufgenommen werden,wobei die Aufnahme über eine Spiegeleinrichtung (30) mit mindestens zwei Spiegelelementen (32a-c) erfolgt, die untereinander einen unterschiedlichen Abstand zu der Empfangsoptik (22) und/oder einen unterschiedlichen Kippwinkel aufweisen und so Abschnitte (18a-c) des Objektstroms mehrfach mit unterschiedlich langen Lichtwegen, die zu unterschiedlichen Gegenstandsweiten führen, und damit unterschiedlichen Tiefenschärfenbereichen gleichzeitig auf einem Bildsensor (24) abbilden,
**dadurch gekennzeichnet,**
**dass** die Spiegelelemente (32a-c) in sich in mindestens zwei Spiegeluntersegmente unterteilt sind, die gegeneinander verkippt sind, und dass so in Breitenrichtung nebeneinanderliegende Teilabschnitte übereinander auf dem Bildsensor (24) abgebildet werden.

## Claims

1. A camera (10) for the detection of a flow of objects (14) moved relative to the camera (10) and for reading codes (20) arranged on the objects (14), wherein the camera (10) comprises an image sensor (24) for taking images of the objects (14) and receiving optics (22) having a depth of field range arranged in front of the image sensor (24), a mirror unit (30) having at least two mirror elements (32a-c) being arranged in front of the receiving optics (22), the mirror elements (32a-c) having a different spacing amongst one another with respect to the receiving optics (22) and/or having a different tilt angle and in this way simultaneously image sections (18a-c) of the object flow a plurality of times with light paths of different length resulting in different object distances and thus different depth of field ranges on the image sensor(24),
**characterized in that** the mirror elements (3a-c) are divided into at least two mirror sub-segments that are tilted with respect to one another in order to image part sections arranged lying next to one another in a width direction above one another at the image sensor (24).

2. The camera (10) in accordance with claim 1,
that has a selection unit (26) for respectively selecting an imaged section of best image focus.

3. The camera (10) in accordance with claim 1 or 2,
that is configured as a camera-based code reader having a decoding unit (26) for the identification of code regions (20) and for reading code content.

4. The camera (10) in accordance with any of the preceding claims,
that has an illumination unit whose light is deflected into the respective sections (18a-c) via the mirror elements (32a-c) in order to illuminate them.

5. The camera (10) in accordance with any of the preceding claims,
wherein the mirror elements (32a-c) are arranged one after the other or staggered above one another.

6. The camera (10) in accordance with any of the preceding claims,
wherein the mirror elements (32a-c) are tilted with respect to one another in such a way that they detect object surfaces of different orientation from two sections (18a-c) spaced apart from one another.

7. The camera (10) in accordance with any of the preceding claims,
that is arranged in a stationary assembly at a conveying apparatus (12) for objects (14) provided with codes (20) forming the flow of objects (14).

8. The camera (10) in accordance with any of the preceding claims,
in which the camera (10) is oriented away from the moved flow.

9. The camera (10) in accordance with any of the preceding claims,
in which the camera (10) is oriented in parallel to the moved flow.

10. A method for the detection of a moved flow of objects (14) and for reading codes (20) arranged on the objects (14), wherein images of the objects (14) are taken with receiving optics (22) having a depth of field range, wherein the images are taken via a mirror unit (30) having at least two mirror elements (32a-c) that have a different spacing amongst one another with respect to the receiving optics (22) and/or having a different tilt angle and in this way simultaneously image sections (18a-c) of the object flow a plurality of times with light paths of different length resulting in different object distances and thus different depth of field ranges on the image sensor (24),
**characterized in that** the mirror elements (3a-c) are divided into at least two mirror sub-segments that are tilted with respect to one another and **in that** thus image part sections arranged lying next to one another in a width direction are imaged above one another at the image sensor (24).

## Revendications

1. Caméra (10) pour détecter un flux d'objets (14) déplacé par rapport à la caméra (10) et pour lire des codes (20) attachés aux objets (14), la caméra (10) comprenant un capteur d'image (24) pour enregistrer des images des objets (14) et une optique de réception (22) agencée en amont du capteur d'image et présentant une zone de profondeur de champ, optique en amont de laquelle est prévu un moyen formant miroir (30) comportant au moins deux éléments miroirs (32a - c) qui présentent entre eux une distance différente vis-à-vis de l'optique de réception (22) et/ou un angle de basculement différent et qui reproduisent ainsi sur le capteur d'image (24) simultanément des portions (18a - c) du flux d'objets plusieurs fois avec des trajets optiques de différentes longueurs qui mènent à différentes distances de l'objet, et ainsi avec différentes plages de profondeur de champ,
**caractérisée en ce que**
les éléments miroirs (32a - c) sont subdivisés en eux-mêmes en au moins deux segments de miroir qui sont basculés l'un par rapport à l'autre pour reproduire sur le capteur d'image (24) des portions partielles juxtaposées en direction de la largeur.

2. Caméra (10) selon la revendication 1,
comprenant une unité de sélection (26) pour sélectionner une portion respective imagée de plus grande netteté.

3. Caméra (10) selon la revendication 1 ou 2,
réalisée sous forme de lecteur de code à base de caméra, pourvu d'une unité de décodage (26) pour identifier des zones de code (20) et pour lire des contenus de code.

4. Caméra (10) selon l'une des revendications précédentes,
comprenant un moyen d'éclairage dont la lumière est renvoyée par les éléments miroirs (32a - c) jusque dans les portions respectives (18a - c), afin de les illuminer.

5. Caméra (10) selon l'une des revendications précédentes,
dans laquelle les éléments miroirs (32a - c) sont agencés de façon échelonnée les uns derrière les autres ou les uns au-dessus des autres.

6. Caméra (10) selon l'une des revendications précédentes,
dans laquelle les éléments miroirs (32a - c) sont basculés les uns par rapport aux autres de telle sorte qu'ils détectent des surfaces d'objet ayant différente orientation de portions (18a - c) espacées les unes des autres.

7. Caméra (10) selon l'une des revendications précédentes montée de façon stationnaire sur un moyen de convoyage (12) pour des objets (14) pourvus de codes (20) et formant le flux d'objets (14).

8. Caméra (10) selon l'une des revendications précédentes,
dans laquelle la caméra (10) est orientée en éloignement du flux déplacé.

9. Caméra (10) selon l'une des revendications précédentes,
dans laquelle la caméra (10) est orientée parallèlement au flux déplacé.

10. Procédé pour détecter un flux d'objets (14) déplacé et pour lire des codes (20) attachés aux objets (14), dans lequel des images des objets (14) sont enregistrées par une optique de réception (22) avec une zone de profondeur de champ, l'enregistrement s'effectuant par un dispositif formant miroir (30) comportant au moins deux éléments miroirs (32a - c) qui présentent entre eux une distance différente vis-à-vis de l'optique de réception (22) et/ou un angle de basculement différent et qui reproduisent ainsi sur le capteur d'image (24) simultanément des portions (18a - c) du flux d'objets plusieurs fois avec des trajets optiques de différentes longueurs qui mènent à différentes distances de l'objet, et ainsi avec différentes plages de profondeur de champ,
**caractérisé en ce que**
les éléments miroirs (32a - c) sont subdivisés en eux-mêmes en au moins deux segments de miroir qui sont basculés l'un par rapport à l'autre, de sorte que des portions partielles juxtaposées en direction de la largeur sont imagées les unes au-dessus des autres sur le capteur d'image (24).
